(19) Europäisches Patentamt
European Patent Office
Office européen des brevets

(11) Veröffentlichungsnummer: **0 191 463 A2**

(12) # EUROPÄISCHE PATENTANMELDUNG

(21) Anmeldenummer: **86101739.0**

(22) Anmeldetag: **12.02.86**

(51) Int. Cl.⁴: **C 08 K 5/04**, C 08 L 23/02 // (C08K5/04, 5:10, 5:15)

(30) Priorität: **14.02.85 DE 3504981**

(43) Veröffentlichungstag der Anmeldung: **20.08.86 Patentblatt 86/34**

(84) Benannte Vertragsstaaten: **CH DE FR GB IT LI**

(71) Anmelder: **BASF Aktiengesellschaft, Carl-Bosch-Strasse 38, D-6700 Ludwigshafen (DE)**

(72) Erfinder: **Hettche, Albert, Dr., Kleiststrasse 12, D-6717 Hessheim (DE)**
Erfinder: **Weiss, Stefan, Dr., Carl-Beck-Strasse 46, D-6903 Neckargemünd (DE)**
Erfinder: **Trauth, Hubert, Milanstrasse 5, D-6724 Dudenhofen (DE)**
Erfinder: **Lechtken, Peter, Dr., Ludwigshafener Strasse 6b, D-6710 Frankenthal (DE)**
Erfinder: **Horner, Michael, Dr., Im Ritterbueschel 9, D-6730 Neustadt (DE)**

(54) **Stabilisatoren.**

(57) Stabilisatoren aus (a) 2,5,7,8-Tetramethyl-2-(2'-stearyloxyethyl) -chroman und (b) Glycerinstearat, -hydroxystearat, Stearinsäurepartialestern von Kondensationsprodukten aus Glycerin und Trimethylolpropan, von Tri- und/oder Tetraglycerin und gegebenenfalls weiteren üblichen Zusätzen, wobei das Verhältnis (a):(b) 10:1 bis 1:10 Gewichtsteile beträgt.

Die Stabilisatoren geben in Kunststoffen wie Polyethylen, Polypropylen eine verbesserte Stabilisierung gegen Verfärbung und eine überlegene Verarbeitungsstabilität.

EP 0 191 463 A2

Stabilisatoren

Die vorliegende Erfindung betrifft neue Stabilisatoren für Kunststoffe auf Basis von Chroman- und Glycerinderivaten, deren Verwendung zum Stabilisieren von Polyolefinen sowie Kunststoffe, die die neuen Stabilisatoren enthalten.

Aus den DE-PS 1 143 319 und 1 136 102 ist es bekannt, α-Tocopherol als Stabilisierungsmittel für Kunststoffe zu verwenden. α-Tocopherol gibt jedoch zu Verfärbungen Anlaß, so daß es vor allem zur Stabilisierung von farblosen Kunststoffen praktisch nicht geeignet ist. Außerdem entspricht die Stabilisierung nicht der mit phenolischen Stabilisatoren erzielten. Aus diesem Grunde vermochte das α-Tocopherol die bisherigen handelsüblichen phenolischen Stabilisatoren wie

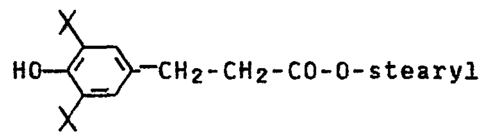 (Ia)

oder

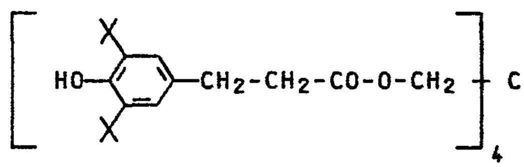 (Ib)

nicht zu ersetzen, obwohl man dem physiologisch unbedenklichen Naturstoff α-Tocopherol an sich den Vorzug geben würde und obwohl auch die phenolischen Stabilisatoren nicht in jeder Beziehung befriedigen.

Aus der JA-OS 141 354/1978 ist bekannt, daß Mischungen aus α-Tocopherol und einem Saccharid oder einem mehrwertigen Alkohol gegen Verfärbung stabiler als die Tocopherole allein sind, jedoch sind die Stabilisierungseffekte nicht ausreichend.

Versuche, α-Tocopherol oder die phenolischen Stabilisatoren durch wirkungsvollere Mittel zum Stabilisieren von Kunststoffen zu ersetzen, sind aus den DE-OS 30 10 505, 31 03 707 und 31 03 740 bekannt. In diesen werden Chromanderivate der Formel

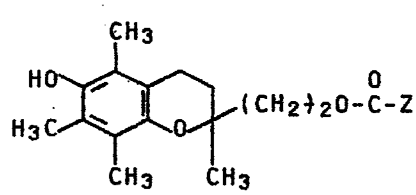 (II),

in der Z für $C_7$- bis $C_{30}$-Alkyl, $-CH_2-CH_2-S-C_1$- bis $C_{30}$-Alkyl oder für

Kg/HB

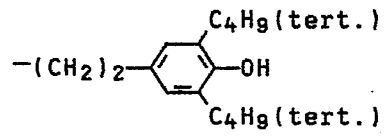

stehen, und deren Verwendung zur Stabilisierung von organischen Materialien beschrieben.

Aufgabe der vorliegenden Erfindung war es, im Vergleich zu den Chromanderivaten (II) verbesserte Stabilisatoren zu entwickeln oder aufzufinden.

Es wurde gefunden, daß in den Stabilisierungseigenschaften verbesserte Stabilisierungsmittel vorliegen, wenn diese

a) 2,5,7,8-Tetramethyl-2-(2'-stearoyloxyethyl)-chroman und
b) Glycerinmonostearat, Glycerin-tri-12-hydroxystearat, Triglycerinstearat, Tetraglycerinstearat, Partialester der Stearinsäure mit Kondensationsprodukten aus Trimethylolpropan und Glycerin im Verhältnis 1:10 bis 10:1 Mol oder Gemischen dieser Stearate und
c) gegebenenfalls in solchen Stabilisatoren übliche Zusätze

enthalten.

Die erfindungsgemäßen Gemische weisen im Vergleich zu den bekannten Chromanderivaten in Polyolefinen, insbesondere in Polyethylen und Polypropylen eine verbesserte Stabilisierung gegen Verfärbung und eine überlegene Verarbeitungsstabilität auf.

Komponente (a) und deren Herstellung ist bekannt (EP-B 36 169, Beispiele 15 und 22).

Die Komponenten (b) sind bekannt. Die Partialester aus den Kondensationsprodukten von Glycerin mit Trimethylolpropan enthalten mindestens einen Stearoylrest im Molekül, vorzugsweise im Mittel 0,2 bis 1,0 Stearoylgruppen je Hydroxylsauerstoffatom. D.h. der Veresterungsgrad liegt zwischen 0,2 und 1,0.

Das Verhältnis von (a):(b) liegt zwischen 1:10 und 10:1 Gewichtsteilen. Bevorzugt sind Gemische mit (a):(b) = 1:1 bis 1:6.

Als gegebenenfalls vorhandene Komponenten (c) kommen z.B. die für Stabilisierungszwecke bekannten Synergisten wie Calciumstearat und Distearylthiodipropionat $(S(CH_2\text{-}CH_2\text{-}COO\text{-}C_{18}H_{37})_2)$ in Betracht. Die Menge an (c) beträgt in der Regel 50 bis 500 Gew.%, bezogen auf (a+b).

Weiterhin können bei der Anwendung der Stabilisatoren gemäß der Erfindung noch zusätzliche Stabilisatoren, synergistisch wirkende Mittel mitverwendet werden.

Die Anwendungsmenge der erfindungsgemäßen Stabilisatoren liegt in der Regel bei 0,05 bis 1,0 Gew.%, bezogen auf den zu stabilisierenden Kunststoff. Die im Hinblick auf die gewünschten Stabilisierungseffekte und die Wirtschaftlichkeit optimalen Mengen können aber auch außerhalb des genannten Bereiches liegen. Diese können leicht durch einige Versuche ermittelt werden.

Die Stabilisatoren können durch mechanisches Mischen der Komponenten (a), (b) und gegebenenfalls (c) hergestellt werden, z.B. durch gemeinsames Mahlen oder durch gemeinsames Fällen aus einer die Komponenten (a), (b) und (c) enthaltenden Lösung in polaren Lösungsmitteln wie Alkoholen oder Aceton durch Zugeben von weniger polaren organischen Flüssigkeiten.

Mit den Stabilisatoren können auch zusammen mit Kunststoffen Konzentrate hergestellt werden und diese dann zusammen mit den zu stabilisierenden Kunststoffen verarbeitet werden.

Bei der Verarbeitung bringen Konzentrate Vorteile, da diese bei der Verarbeitung leichter zu handhaben und zu dosieren sind als die pulverförmigen oder pastösen Mischungen aus (a), (b) und gegebenenfalls (c).

Als Kunststoffe kommen insbesondere Thermoplaste, wie Styrolpolymerisate, Polyvinylchlorid, Polyamide, Polybutylenterephthalat, vorzugsweise Polyethylen und Polypropylen in Betracht.

Für die Eignung und die Wirksamkeit von Stabilisatoren sind vor allem die folgenden Kriterien maßgebend:

1. die Farbe; der Kunststoff soll durch den Stabilisator nicht verfärbt werden. Diese Forderung ist für farblose Kunststoffe besonders wichtig.
2. Verarbeitungsstabilität; hierunter wird die Konstanz der Eigenschaften von Thermoplasten gegenüber der mechanischen und thermischen Beanspruchung bei Formgebungsverfahren wie der Extrusion oder dem Spritzguß verstanden. Eine Maßzahl für die Verarbeitungsstabilität läßt sich aus der Änderung des Schmelzverhaltens der betreffenden Thermoplaste nach mehrmaliger Formgebung unter Aufschmelzen ableiten: Schmelzindex-Test nach DIN 53 735.

Ein wichtiges Kriterium für die Verarbeitungsstabilität ist auch die Veränderung der Farbe nach mehrmaliger Formgebung unter Aufschmelzen. Diese Veränderung sollte möglichst gering sein: Yellowness-Test (ASTMD 1925).

Die erfindungsgemäßen Stabilisatoren erfüllen Punkt 1 befriedigend bis ausgezeichnet. In dieser Hinsicht sind sie den α-Tocopherolen und den reinen Komponenten (a) überlegen.

Hinsichtlich Punkt 2 bieten die erfindungsgemäßen Stabilisatoren besondere Vorteile gegenüber den phenolischen Stabilisatoren des Standes der Technik.

Die Erfindung soll durch die folgenden Beispiele zusätzlich erläutert werden.

Die Stabilisator enthaltenden Polymere wurden hinsichtlich Farbqualität und Verarbeitungsstabilität beurteilt.

I.

I. Die Farbqualität wurde als Yellowness-Index YI angegeben. Dieser wurde nach dem Yellowness-Test nach ASTMD 1925 in Polypropylen bestimmt.

Je höher die Werte, um so geringer ist die Farbqualität, d.h. um so stärker die Verfärbung. Bei der Farbqualität entsprechen die genannten Werte den angegebenen visuellen Eindrücken

bis 2 nicht erkennbare Verfärbung
3 bis 5 sehr schwache Verfärbung
5 bis 10 schwache, aber bereits deutlich erkennbare Verfärbung
10 bis 20 merkliche Verfärbung
$> 20$ starke Verfärbung

Der Stabilisator wurde in allen Fällen in gleicher Weise eingearbeitet und das Material zu Granulat von 15 mm Schichtdicke verarbeitet, aus dem Platten von 1 mm Schichtdicke geformt wurden. An letzteren wurde der Yellowness-Index bestimmt.

II. Die Verarbeitungsstabilität wurde an den gleichen Polypropylenproben wie sie bei (I) verwendet wurden, bestimmt. Hierzu wurde das Gemisch extrudiert und granuliert. An dieser einmal extrudierten Probe wurde der Schmelzindex nach DIN 53 735 bestimmt: $MFI_1$. Diese Probe wurde dann noch 5-mal extrudiert und granuliert und diesem Produkt dann der Schmelzindex wie oben bestimmt: $MFI_6$.

Aus den Schmelzindices wurde der Quotient

$$\frac{MFI_6}{MFI_1} \text{ gebildet.}$$

Je größer der Quotient ist, umso geringer ist die Verarbeitungsstabilität.

Weiterhin wurde an den Proben nach einmaligem und sechsmaligem Extrudieren und Granulieren der Yellowness-Index $YI_1$ und $YI_6$ nach (I) bestimmt.

Als Polypropylen wurde in allen Fällen additivfreies dechloriertes Polypropylen verwendet.

Beispiele 1 bis 7

In additivfreiem dechloriertem Polypropylen wurde der in der folgenden Tabelle angegebene Stabilisator in der angegebenen Menge durch Extrusion eingearbeitet und die Masse granuliert.

An dem Granulat wurde nach (I) der Yellowness-Index und nach (II) der Schmelzindex nach einmaligem und sechsmaligem Extrudieren bestimmt. Die Meßergebnisse sind in den Spalten 5 bis 8 der Tabelle zusammengestellt.

Verwendet man als (b) (i) mit Stearinsäure partiell veresterte Trimethylolpropan-Glycerin-Kondensationsprodukte, die einen Veresterungsgrad von 0,2 bis 0,9 aufweisen, (ii) Tri- und/oder Tetraglycerine, die mit Stearinsäure partiell verestert sind (Veresterungsgrad 0,2 bis 0,9), dann erhält man ähnlich gute Ergebnisse.

Tabelle

| Beispiel | Stabilisator (a) | Stabilisator (b) | Konz. % 3) | Verhältnis (a) : (b) [Gew.-Teile] | Schmelzindex MFI $MFI_1$ | Schmelzindex MFI $MFI_6$ | Yellowness-Index $YI_1$ | Yellowness-Index $YI_6$ |
|---|---|---|---|---|---|---|---|---|
| 1 | (a) | Glycerin-monostearat | 0,1 | 1 : 2 | 4,3 | 9,4 | 1,0 | 7,5 |
| 2 | (a) | Glycerin-monostearat | 0,1 | 1 : 4 | 4,2 | 9,2 | 0,7 | 4,3 |
| 3 | (a) | Glycerin-tri-12-hydroxystearat | 0,1 | 1 : 2 | 4,4 | 9,5 | 1,7 | 7,6 |
| 4 | (a) | Glycerin-tri-12-hydroxystearat | 0,1 | 1 : 4 | 4,2 | 9,3 | 1,0 | 4,6 |
| 5 | (a) | TMP/Glycerin (1:4) Kondensat-Stearat1) | 0,1 | 1 : 2 | 4,3 | 8,9 | 2,1 | 7,5 |
| 6 | (a) | TMP/Glycerin (1:4) Kondensat-Stearat1) | 0,1 | 1 : 4 | 4,1 | 8,5 | 1,5 | 4,5 |
| 7 | (a) | Tri/Tetraglycerin-stearat2) | 0,1 | 1 : 2 | 4,7 | 9,7 | 2,2 | 10,5 |
| | | | 0,1 | 1 : 4 | 4,5 | 9,5 | 2,1 | 8,1 |
| Vgl. | (a) | - | 0,1 | 1 : 0 | 4,2 | 89 | 4,0 | 17,0 |

(a) = 2,5,7,8-Tetramethyl-2-(2'-stearyloxyethyl)-chroman

1) Kondensationsprodukt aus Trimethylolpropan (TMP) und Glycerin (1:4 Mol), mit Stearinsäure verestert (Veresterungsgrad: 0,75)

2) Tri- und Tetraglyceringemisch verestert mit Stearinsäure (Veresterungsgrad: 0,75)

3) bezogen auf Polypropylen

Patentansprüche

1. Stabilisatoren für Kunststoffe, enthaltend

a) 2,5,7,8-Tetramethyl-2(2'-stearoyloxyethyl)-chroman und
b) Glycerinmonostearat, Glycerin-tri-12-hydroxystearat, Partialester der Stearinsäure mit Kondensationsprodukten aus Trimethylolpropan und Glycerin im Verhältnis 1:10 bis 10:1 Mol, Triglycerinstearat, Tetraglycerinstearat oder Gemischen dieser Stearate und gegebenenfalls
c) in solchen Stabilisatoren übliche Zusätze,

wobei das Verhältnis (a):(b) = 1:10 bis 10:1, vorzugsweise 1:1 bis 1:6 Gewichtsteile beträgt.

2. Verwendung der Stabilisatoren gemäß Anspruch 1 zur Stabilisierung von Polyolefinen.

3. Kunststoffe enthaltend 0,05 bis 1 Gew.%, bezogen auf Kunststoff, der Stabilisatoren gemäß Anspruch 1.